# EUROPÄISCHE PATENTSCHRIFT

(11) **EP 2 673 393 B1**
(45) Veröffentlichungstag und Bekanntmachung des Hinweises auf die Patenterteilung: **06.03.2019**
(21) Anmeldenummer: 12703985.7
(22) Anmeldetag: 23.01.2012
(51) Int. Cl.: C23C 24/08, B64G 1/22, B64G 1/54, B64G 1/50, C09D 1/02, C09D 7/61, C08K 3/08, C08K 3/20, C08K 3/38

(54) **SCHUTZBESCHICHTUNG FÜR BAUTEILE AUS DER LUFT- UND RAUMFAHRTTECHNIK UND IHRE HERSTELLUNG**
PROTECTIVE COATING FOR COMPONENTS OF AEROSPACE ENGINEERING AND THEIR MANUFACTURE
REVÊTEMENT PROTECTEUR POUR DES COMPOSANTS DE LA TECHNIQUE AÉROSPATIALE ET LEUR FABRICATION

(30) Priorität: 11.02.2011 DE 102011003977
(43) Veröffentlichungstag der Anmeldung: 18.12.2013
(73) Patentinhaber: CeraNovis GmbH, 66117 Saarbrücken (DE)
(72) Erfinder: FABER, Stefan, 66133 Saarbrücken (DE); SCHNEIDER,Heike, 66130 Saarbrücken (DE); MEYER, Frank, 66123 Saarbrücken (DE); HERZOG, Manuel, 66386 St. Ingbert (DE)
(74) Vertreter: Patentanwaltskanzlei Cartagena
(86) Internationale Anmeldenummer: PCT/EP2012/050957
(87) Internationale Veröffentlichungsnummer: WO 2012/107269

(56) Entgegenhaltungen:
- EP-A1- 0 911 859
- WO-A1-2007/104467
- DE-A1- 10 127 494
- US-A- 3 784 499
- US-A- 4 329 731
- US-A- 5 236 151
- US-A- 5 296 285
- US-A- 6 045 609
- US-A- 6 099 637
- US-A1- 2003 042 368
- RUDOLPH S: "High-Performance Ceramics - Composition and Application of Coatings Based on Boron Nitride", INTERCERAM, vol. 42, no. 5, 1993, pages 302-305, XP055357238, Expert Fachmedien GmbH, Düsseldorf [DE]

## Beschreibung

Die vorliegende Erfindung betrifft ein Verfahren zum Schützen eines Substrats vor Beschädigung durch elektromagnetische Strahlung und/ oder Partikelbeschuss, wobei es sich bei dem Substrat um ein Bauteil aus der Luft- und Raumfahrttechnik handelt, eine Schicht oder Beschichtung, hergestellt oder herstellbar nach diesem Verfahren sowie Substrate, welche eine solche Schicht oder Beschichtung aufweisen.
Raumflugkörper wie Satelliten sind im Weltraum, insbesondere in Sonnennähe, extremen Bedingungen ausgesetzt. Sie unterliegen einer langfristigen Exposition gegebenenfalls sehr harter elektromagnetischer Strahlung und Teilchenstrahlung und darüber hinaus auch extremen Temperaturschwankungen. So ist es möglich, dass die Oberflächen der Flugkörper innerhalb von wenigen Minuten einen Temperaturbereich von -200 °C bis +500 °C durchlaufen, abhängig davon, ob sie der Sonne zu- oder abgewandt sind. Aufgrund der hohen Temperaturen in Sonnennähe können insbesondere die Außenteile der Raumkörper nur aus speziellen Materialien wie hochtemperaturfesten Aluminium- und Titanlegierungen sowie Kompositwerkstoffen gefertigt werden. Darüber hinaus machen die extremen Bedingungen eine temperaturregulierende Beschichtung der Bauteile unverzichtbar.
Um die Energiemenge, welche bei Bestrahlung von einem Substrat absorbiert wird, zu kontrollieren, gibt es prinzipiell zwei Möglichkeiten: Konventionelle Isolationsmaterialien und speziell angefertigte Oberflächenbeschichtungen mit besonderen optischen Eigenschaften. Konventionelle Isolationsmaterialien mit einer niedrigen Wärmeleitfähigkeit sind meistens voluminös und/oder schwer. Da das Bestreben nach einer Gewichts- und Platzreduzierung bei jeder Anwendung im Bereich der Luft- und Raumfahrttechnik im Vordergrund steht, haben diese Materialien auf diesem Gebiet nur einen begrenzten Nutzen. Dagegen können durch die speziell angefertigten Oberflächenbeschichtungen sowohl die Wärmeabsorption reduziert, als auch die Gesamtmenge an zugeführtem Gewicht bzw. Volumen auf ein Minimum begrenzt werden.

Die Wärmemenge, die von einer solchen Beschichtung bzw. dem damit geschützten Substrat aufgenommen wird, hängt im Wesentlichen von drei oberflächenoptischen Eigenschaften ab: Reflexion, solare Absorption und Emissionsvermögen. Bei Reflexion wird die Strahlungsenergie abgeleitet, eine Temperaturerhöhung bleibt aus. Kommt es zu einer Absorption, muss die aufgenommene Energie wieder emittiert werden, um eine Aufheizung der Oberfläche zu vermeiden. Hierzu zeichnen sich Bauteile im Bereich der Luft- und Raumfahrttechnik idealerweise durch eine weiße Oberfläche mit einem geringen Absorptionskoeffizienten und einem hohen Emissionsvermögen aus.

Aus dem Stand der Technik sind weiße Oberflächenbeschichtungen für geostationäre Anwendungen bekannt, die auf silikonbasierten, weiß pigmentierten Hochtemperaturfarben basieren. Diese Farben weisen jedoch einen sehr hohen organischen Kohlenstoffanteil auf, der meist auf organische Bindersysteme und Additive bzw. Hybridmaterialen wie beispielsweise Polysiloxan zurückzuführen ist. Bei hohen Temperaturen im Vakuum, insbesondere in Kombination mit extremer UV-Strahlung, kann eine Verkohlung eintreten, resultierend in einer Schwarzfärbung der Oberflächenbeschichtung. Dies kann zu einer Erwärmung des Bauteils und in extremen Fällen zu einer Materialermüdung führen.

Bekannt sind außerdem mittels PVD (physical vapour deposition) oder CVD (chemical vapour deposition) aufgedampfte Beschichtungen, bestehend aus verschiedenen transparenten oder weißen Oxiden. Eine so aufgebrachte Schicht ist aufgrund des großen apparativen Aufwands aber sehr teuer und dreidimensionale Bauteile mit komplexer Geometrie lassen sich nur eingeschränkt beschichten.
Die US 5885658 A offenbart ein Verfahren, gemäß dem Aluminiumbauteile für Raumflugkörper mit einer wasserglasbasierten, weiß pigmentierten, temperaturregulierenden Schicht versehen werden. Um den extremen Bedingungen im Weltraum Stand zu halten, wird diese Schicht mit einer transparenten, fluoropolymerbasierten Schutzschicht überzogen. Diese Schutzschicht zeigt zwar eine erhöhte Beständigkeit gegenüber UV-Strahlung, allerdings kann es oberhalb von 300 °C zu einer Zersetzung des Fluoropolymers kommen. In Sonnennähe sowie bei Atmosphärenein- und austritten würde die Schicht folglich Schaden nehmen. Für Langzeitmissionen, die eine Bauteilwartung nicht vorsehen, ist eine solche Schicht ungeeignet. Darüber hinaus zeigen diese wasserglasbasierten Systeme meist nur eine geringe Temperaturwechselbeständigkeit, was das Einsatzgebiet dieser Systeme weiter einschränkt.
Aus der US 2003/0042368 A1 ist eine Beschichtung für Raumflugkörper, die weiße Partikel enthalten kann, bekannt. Weiterhin kann die Schicht beispielsweise Bi₄Ti₃O₁₂-Partikel aufweisen. Als Binder kann ein Kaliumwasserglas verwendet werden.
Aus der WO 2007/104467 A1 ist eine bornitridhaltige Beschichtung bekannt, die Salzablagerungen in technischen Anlagen wie z.B. Kraftwerken oder Wasseraufbereitungsanlagen entgegenwirkt.
Aus der US 4329731 A ist eine Schicht mit dielektrischen Eigenschaften bekannt, die Anwendung im Bereich der Luft- und Raumfahrt finden kann. Die Schicht ist aus Kapton®, einem Kunststoff, gebildet. Aus der US 3784499 A ist eine nicht entflammbare Beschichtung bekannt, die Verwendung in Umgebungen mit hohem Sauerstoffanteil findet. Die Beschichtung basiert auf einem Vinylacetatpolymer und kann ein Fluorosilikat enthalten.
Aus der US 5236151 A ist Schutzschicht bekannt, die auf einem Substrat eine thermische Barriere bilden kann. Die Schutzschicht kann auf einem keramischen Material wie Aluminiumoxid basieren.
Der vorliegenden Erfindung lag die Aufgabe zugrunde, eine technische Lösung zum Schützen von Substraten wie Raumflugkörpern und deren Bauteilen vor den genannten Belastungen bereitzustellen, welche die aus dem Stand der Technik bekannten Nachteile nicht aufweist. Geschützt werden sollen insbesondere Bauteile aus Metall sowie aus faserverstärkten Kompositwerkstoffen, die im Bereich der Luft- und Raumfahrttechnik Verwendung finden. Die geschützten Bauteile sollen sich insbesondere für Raumflugkörper eignen, die für sonnennahe Tiefraummissionen vorgesehen sind.
Diese Aufgabe wird gelöst durch das Verfahren mit den Merkmalen des unabhängigen Anspruchs 1 und die Schicht oder Beschichtung mit den Merkmalen des unabhängigen Anspruchs 7. Bevorzugte Ausführungsformen des erfindungsgemäßen Verfahrens sind in den abhängigen Ansprüchen 2 bis 6 enthalten. Bevorzugte Ausführungsformen der erfindungsgemäßen Schicht oder Beschichtung sind in den abhängigen Ansprüchen 8 bis 10 angegeben. Daneben sind auch Substrate mit den Merkmalen des Anspruchs 11 Gegenstand der vorliegenden Erfindung. Das erfindungsgemäße Verfahren dient zum Schützen eines Substrats vor Beschädigung durch elektromagnetische Strahlung und/oder Partikelbeschuss, also vor Bedingungen, wie sie insbesondere im Weltraum auftreten. Es zeichnet sich dadurch aus, dass auf das Substrat eine Zusammensetzung, umfassend Partikel mit Schichtgitterstruktur, anorganische Partikel, die transparent oder weiß sind, sowie einen anorganischen Binder, als Schicht aufgebracht und getrocknet wird.

Als Partikel mit Schichtgitterstruktur werden Bornitridpartikel verwendet. Unter einer Schichtgitterstruktur soll vorliegend verstanden werden, dass auf molekularer Ebene parallel zueinander verlaufende Schichten bestehen, wobei es bevorzugt ist, dass die Bindung zwischen benachbarten Atomen in einer Schicht im Mittel größer ist als zu benachbarten Atomen in einer parallelen Schicht.

Als anorganische transparente oder weiße Partikel werden vorliegend insbesondere Partikel bezeichnet, welche im sichtbaren Bereich des elektromagnetischen Spektrums eine weiße Farbe bzw. eine Transparenz zeigen. Insbesondere dienen sie der Erzeugung von optischer Weiße in der Schicht. Bevorzugt weisen die anorganischen Partikel eine Mohs'sche Härte von mindestens 6 auf.

Die anorganischen transparenten oder weißen Partikel sind bevorzugt verschieden von den Partikeln mit der Schichtgitterstruktur, auch wenn letztere durchaus selbst transparent oder weiß sein können.

Bevorzugt handelt es sich bei den anorganischen Partikeln um mindestens ein Mitglied aus der Gruppe mit Aluminiumtitanatpartikeln, Zirkoniumdioxidpartikeln und Aluminiumoxidpartikeln, letzteres insbesondere in seiner Modifikation Korund. Als transparente Partikel kommen beispielsweise Partikel aus hochschmelzendem Glas, bevorzugt mit einem Schmelzpunkt > 600 °C, insbesondere > 800 °C, in Frage.

Die anorganischen transparenten oder weißen Partikel weisen bevorzugt einen Brechungsindex von n ≥ 1,6 auf.

Bei dem zu schützenden Substrat handelt es sich meist um ein metallisches Substrat. Bevorzugt werden mit dem erfindungsgemäßen Verfahren Substrate beschichtet, die für Bauteile im Bereich der Luft- und Raumfahrttechnik eingesetzt werden. Insbesondere handelt es sich dabei um Substrate aus Aluminium oder einer hochtemperaturfesten Aluminiumlegierung (z.B. Alloy 6082, Dispal®), Titan oder einer hochtemperaturfesten Titanlegierung (z.B. TiAl₆V₄) oder aus einem faserverstärkten Werkstoff (z.B. einem Kompositwerkstoff aus Kohlenstofffasern und Siliziumcarbid). In Frage kommen des weiteren insbesondere auch Substrate aus Niob oder aus einer Nioblegierung sowie Substrate aus Stahl, aus einem Glas, aus Quarz oder aus einer Keramik.
Das Aufbringen der Zusammensetzung auf das Substrat kann mittels üblicher Verfahren wie Sprühen, Tauchen, Fluten etc. erfolgen. Bevorzugt ist der Auftrag durch Sprühen, insbesondere durch Niederdrucksprühen. Durch Einstellen der Viskosität der Zusammensetzung, sowie der Sprühparameter (Druck, Materialfluss und Abstand zum Substrat) lassen sich definierte Schichtdicken realisieren. Einstellen lässt sich die Viskosität, indem der erfindungsgemäß verwendeten Zusammensetzung eine definierte Menge Lösungs- bzw. Dispergiermittel zugegeben wird. Das Lösungs- bzw. Dispergiermittel sollte idealerweise nur flüchtige Bestandteile enthalten, die unter den oben genannten extremen Bedingungen nicht verkohlen können. Bevorzugt wird ein polares Lösungs- bzw. Dispergiermittel verwendet, insbesondere Wasser. Besonders bevorzugt handelt es sich bei der verwendeten Zusammensetzung um eine wässrige Suspension aus dem Lösungs- bzw. Dispergiermittel, den anorganischen Partikeln und den Partikeln aus hexagonalem Bornitrid mit einem Feststoffanteil zwischen 25 und 60 Gew.-%, bevorzugt zwischen 35 und 45 Gew.-%. Als Lösungsmittel ist also bevorzugt ausschließlich Wasser in einem Anteil zwischen 40 und 75 Gew.-% enthalten. Grundsätzlich kann das Lösungs- bzw. Dispergiermittel aber auch weitere polare Komponenten wie beispielsweise Alkohole zumindest anteilig enthalten.
In einer bevorzugten Ausführung des erfindungsgemäßen Verfahrens wird auf die zu schützenden Substrate vor dem Aufbringen der Zusammensetzung ein Haftvermittler aufgebracht. Dieser sollte möglichst dünn mit einer Schichtdicke zwischen 1 *µ*m und 5 *µ*m, bevorzugt zwischen 1 *µ*m und 3 *µ*m, aufgebracht werden. Bevorzugt handelt es sich dabei aus stofflicher Sicht um den gleichen anorganischen Binder, der auch in der Zusammensetzung enthalten ist und auf den im Folgenden noch näher eingegangen wird.

Vorzugsweise wird die Substratoberfläche vor dem Aufbringen der Zusammensetzung bzw. gegebenenfalls des Haftvermittlers mechanisch, beispielsweise durch einen Strahlprozess unter Verwendung von Glasgranulat oder Korund, aufgeraut oder anderweitig chemisch oder physikalisch behandelt, um eine verbesserte Haftung zu erzielen. Alternativen zur mechanischen Aufrauhung sind beispielsweise Ätzen, Bedampfen, Erodieren oder Fräsen. Daneben werden gegebenenfalls die zu beschichtenden Substrate zur Entfernung von Schmutz- und Fettresten durch Eintauchen der Substrate in Reinigungsbäder, beispielsweise gefüllt mit einer üblichen Detergenzlösung, gereinigt. Gegebenenfalls kann dieser Prozess durch Applikation von Ultraschall unterstützt werden.

Die Zusammensetzung und/oder der Haftvermittler können in einem oder in mehreren Arbeitsgängen auf das Substrat aufgebracht werden, insbesondere der aufeinanderfolgende Auftrag von drei bis vier Schichten aus der Zusammensetzung kann bevorzugt sein, wobei die Schichtdicke jeder der Schichten bevorzugt zwischen 2 µm und 10 µm, insbesondere etwa 5 µm, beträgt. Zwischen den einzelnen Arbeitsgängen können Trocknungsschritte vorgesehen sein, sowohl zwischen dem Aufbringen des Haftvermittlers und der Zusammensetzung als auch zwischen dem aufeinanderfolgenden Auftrag von zwei Schichten aus der Zusammensetzung. In beiden Fällen kann allerdings auch ein Nass-auf-Nass-Auftrag bevorzugt sein.

Nach dem Aufbringen der Zusammensetzung wird diese getrocknet. Dazu kann man die beschichteten Substrate im einfachsten Fall einfach bei Raumtemperatur ruhen lassen. Die Trocknung kann in bevorzugten Ausführungsformen aber auch im Rahmen einer Wärmebehandlung erfolgen, bei der das beschichtete Bauteil Temperaturen insbesondere zwischen 50 °C und 600 °C, bevorzugt zwischen 100 °C und 500 °C, ausgesetzt wird, beispielsweise in einem Sinterofen. Die Behandlung kann an Luft, im Vakuum oder unter einer Schutzgasatmosphäre vorgenommen werden. Gegebenenfalls kann auch zunächst sauerstofffrei gearbeitet werden und am Ende der Behandlung eine Sauerstoffexposition erfolgen. Dies ist aber nicht zwingend erforderlich. Alternativ kann sich die Wärmebehandlung natürlich auch als separater Schritt an die Trocknung anschließen. Zur Trocknung kann das mit der Zusammensetzung beschichtete Substrat ebenfalls erwärmt werden, beispielsweise auf eine Temperatur zwischen 30 °C und 120 °C, insbesondere in einem Umlufttrockenschrank oder durch IR-Strahlung.

Die im Rahmen des erfindungsgemäßen Verfahrens verwendete Zusammensetzung umfasst als Binder bevorzugt einen Glasbildner, insbesondere einen Glasbildner, der bei Raumtemperatur in Wasser prozessierbar ist. In Wasser prozessierbare Glasbildner sind dem Fachmann grundsätzlich bekannt. Sie sind in der Regel bei Raumtemperatur mindestens teilweise in Wasser löslich und vermögen nach Entfernung des Wassers und Erwärmung, gegebenenfalls Aufschmelzen, eine glasartige Matrix auszubilden, die beispielsweise auf den Grundbauelementen [-PO₄]- und/oder [-SiO₄]- basieren kann.

Bevorzugt umfasst der Binder ein Wasserglas oder ein Phosphatglas, besonders bevorzugt handelt es sich bei dem Binder um eine dieser Komponenten. Unter dem Begriff Wasserglas versteht der Fachmann bekanntlich wasserlösliche, aus dem Schmelzfluss erstarrte Alkalisilikate, insbesondere Kalium- und Natriumsilikate, bzw. deren (viskose) wässrige Lösungen. Auf die entsprechenden Definitionen in den einschlägigen Lehrbüchern kann hier verwiesen werden. Die Wassergläser werden üblicherweise auch durch das Massen- oder Molverhältnis SiO₂/Alkalioxid sowie durch die Dichte der wässrigen Lösungen charakterisiert. Die Dichteangaben erfolgen dabei teilweise noch in Baume-Graden, einer Aräometer-Dichteskala, die ursprünglich mit einer 10%igen Kochsalzlösung geeicht wurde. Das Verhältnis von Alkalioxid zu SiO₂ in einem Wasserglas wird oft auch als sogenanntes Modul bezeichnet.

Vorliegend wird als Wasserglas bevorzugt ein Kaliumwasserglas, also ein wässriges oder wasserlösliches Kaliumsilikat, verwendet. Vorzugsweise liegt das verwendete Wasserglas in Form seiner wässrigen Lösung vor. Insbesondere können auch Mischungen verschiedener Wassergläser verwendet werden. Das Modul bevorzugt verwendeter Wassergläser liegt zwischen 2 und 4, insbesondere 2,5.

Insbesondere wenn ein Kaliumwasserglas verwendet wird, kann es bevorzugt sein, die oben beschriebene Trocknung in einer kohlendioxidhaltigen Atmosphäre durchzuführen. Es bildet sich dann üblicherweise während des Trocknungsprozesses Kaliumcarbonat.

Phosphatgläser weisen als Grundbauelement [PO₄]-Tetraeder auf. Sie werden in der Regel hergestellt, indem man oxidische Verbindungen in eine Schmelze aus Phosphorpentoxid einbringt. Phosphatgläser sind häufig stark hygroskopisch und lösen sich häufig zumindest teilweise in Wasser.

In bevorzugten Ausführungsformen können bei den Phosphatgläsern auch ein Teil der [PO₄]-Tetraeder durch [SiO₄]-Einheiten ersetzt sein. Im Rahmen der vorliegenden Erfindung bevorzugt einsetzbare Phosphatglasbinder bestehen formal im Wesentlichen aus SiO₂, P₂O₅, Al₂O₃ sowie einem Anteil an Alkali- und/oder Erdalkalimetallen und weisen in besonders bevorzugt Ausführungsformen Spuren von ZnO und Fe₂O₃ auf. Des Weiteren erweichen im Rahmen der vorliegenden Erfindung bevorzugt einsetzbare Phosphatgläser bei Temperaturen zwischen 450 °C und 550 °C, insbesondere bei etwa 500 °C, und beginnen bei Temperaturen oberhalb von etwa 600 °C zu sintern.

Eine Zusammensetzung, umfassend die Partikel aus hexagonalem Bornitrid und die beschriebenen anorganischen Partikel sowie das beschriebene Phosphatglas als anorganischen Binder, aus der sich gemäß dem vorliegend beschriebenen Verfahren Schichten oder Beschichtungen herstellen lassen, die zum Schutz eines bevorzugt metallischen Substrats vor Beschädigung durch elektromagnetische Strahlung und/oder Partikelbeschuss dienen, ist ebenfalls Gegenstand der vorliegenden Erfindung.
Die Verwendung von Wassergläsern und Phosphatgläsern als Binder bringt besondere Vorteile mit sich. Bei fehlerhaftem Auftrag der Zusammensetzung auf das Bauteil besteht die Möglichkeit, die Zusammensetzung nach dem Trocknungsschritt durch Einwirkung von Wasser oder einer alkalischen Reinigungslösung, also ohne zerstörende, abrasive Reinigungsschritte, restlos abzuwaschen und damit das fehlbeschichtete Substrat zu "recyceln". Nach der Wärmebehandlung ist dies zumindest bei Verwendung von Wassergläsern in der Regel nicht mehr möglich.
Ziel der Trocknung ist es insbesondere, in der Zusammensetzung enthaltenes Lösungs- bzw. Dispergiermittel möglichst vollständig zu entfernen. Hingegen hat die Wärmebehandlung das Ziel, eine strukturelle Aushärtung der Schicht auf dem Substrat herbeizuführen, gegebenenfalls auch unter Umsetzung der in der Zusammensetzung enthaltenen Komponenten zu einer neuen chemischen Verbindung. So können z.B. die beschriebenen Wassergläser durch Kondensationsreaktionen bei der Wärmebehandlung abbinden und eine feste, glasartige Matrix ausbilden, in welche die übrigen Komponenten der Zusammensetzung eingelagert sind.
Weiterhin lässt sich durch die Art und die Konzentration der verwendeten Wassergläser auch die Porosität der entstehenden Beschichtung einstellen.

Die Zusammensetzung, welche gemäß dem erfindungsgemäßen Verfahren auf das Substrat aufgebracht wird, enthält bevorzugt die folgenden Bestandteile in den folgenden Anteilen:
(1) Den anorganischen Binder in einem Anteil zwischen 10 Gew.-% und 30 Gew.-%, bevorzugt zwischen 15 Gew.-% und 25 Gew.-%
(2) Die anorganischen Partikel in einem Anteil zwischen 40 Gew.-% und 70 Gew.-%, bevorzugt zwischen 50 Gew.-% und 60 Gew.-%
(3) Die Partikel aus hexagonalem Bornitrid in einem Anteil zwischen 2 Gew.-% und 10 Gew.-%, bevorzugt zwischen 4 Gew.-% und 7 Gew.-%
(4) Das Lösungs- bzw. Dispergiermittel in einem Anteil zwischen 10 Gew.-% und 40 Gew.-%, bevorzugt zwischen 15 Gew.-% und 25 Gew.-%
Die genannten Prozentangaben ergänzen sich dabei zu 100 Gew.-%. Es ist zu beachten, dass der anorganische Binder selbst einen Anteil an Lösungsmittel enthalten kann, z.B. Wasser bei Verwendung eines Wasserglases als Binder. In diesem Fall kann der Anteil an Komponente (4) in der Zusammensetzung unter Umständen auch bei 0 liegen.
Besonders bevorzugt erfolgt im Rahmen des erfindungsgemäßen Verfahrens eine Strukturierung der aufgebrachten Schicht. Hierunter soll verstanden werden, dass die aufgebrachte Schicht punktuell und/oder entlang von einer oder mehreren durchgängigen Linien geschwächt wird, indem die Schicht in diesen Punkten und/oder Linien zumindest teilweise abgetragen wird, idealerweise sogar so weit, dass die Substratoberfläche in den Punkten und/oder Linien vollständig frei liegt. Dies dient dazu, die Leitfähigkeit der Beschichtung auf dem Substrat einzustellen, so dass auf seiner Oberfläche entstehende elektrostatische Aufladungen besser abgeleitet werden können. Die Strukturierung erfolgt dabei bevorzugt derart, dass bei der Abtragung zwischen 0,005 % und 1,5 %, insbesondere zwischen 0,01 % und 1 %, der mit der Zusammensetzung bedeckten Substratfläche freigelegt werden. Idealerweise überschreitet der Widerstand der Schicht einen Wert von 10⁻⁸ Ω/cm nicht. Bevorzugt ist ein Wert zwischen 10⁻⁸ und 10⁻¹² Ω/cm.
Die Strukturierung kann sich an die beschriebene Wärmebehandlung anschließen, es kann aber auch bevorzugt sein, diesen Zusatzschritt zwischen Trocknung und Wärmebehandlung durchzuführen. Die Strukturierung der Schicht erfolgt bevorzugt auf mechanischem Weg. So können die Linien und/oder Punkte beispielsweise gebildet werden, indem die aufgebrachte Schicht gemäß einem vorgegebenen Muster mit Hilfe eines Werkzeugs wie einer dünnen Nadel, bevorzugt aus Titan oder Stahl, zumindest teilweise entfernt wird.
Eine erfindungsgemäße Schicht oder Beschichtung zeichnet sich dadurch aus, dass sie eine glasartige Matrix aufweist, in welche die Partikel aus hexagonalem Bornitrid sowie anorganische Partikel eingelagert sind. Angeordnet ist sie auf einem Substrat, insbesondere auf der Oberfläche eines Substrats aus Aluminium oder einer hochtemperaturfesten Aluminiumlegierung, Titan oder einer hochtemperaturfesten Titanlegierung oder aus einem faserverstärkten Werkstoff wie z.B. einem Kompositwerkstoff aus Kohlenstofffasern und Siliziumcarbid. Bei dem Substrat handelt es sich um ein Teil eines Raumflugkörpers. Herstellen lässt sich die erfindungsgemäße Schicht insbesondere gemäß dem beschriebenen erfindungsgemäßen Verfahren. Die glasartige Matrix wird dabei aus dem beschriebenen anorganischen Binder gebildet. Entsprechend kann im Hinblick auf bevorzugte Ausführungsformen der anorganischen Partikel und sonstiger gegebenenfalls in der Matrix enthaltener Bestandteile auf die entsprechenden obigen Ausführungen Bezug genommen und verwiesen werden.
Bevorzugt handelt es sich bei der Matrix um eine silikatische Matrix mit [SiO₄]-Grundeinheiten oder eine Matrix basierend auf Phosphatglas mit [PO₄]-Grundeinheiten, die aus dem oben beschriebenen Wasser- oder Phosphatglas resultiert.

Die anorganischen Partikel sowie die Partikel mit der aus hexagonalem Bornitrid liegen in der Matrix bevorzugt partikulär mit einer bevorzugten mittleren Teilchengröße zwischen 0,1 *µ*m und 6 *µ*m vor. In Weiterbildung ist es bevorzugt, dass die anorganischen Partikel eine mittlere Teilchengröße zwischen 1 *µ*m und 2 *µ*m, die Partikel mit der Schichtgitterstruktur eine mittlere Partikelgröße zwischen 0,1 *µ*m und 5 *µ*m, aufweisen. Die Partikelgrößen ändern sich in der Regel bei der Herstellung der erfindungsgemäßen Schicht gemäß dem vorliegend beschriebenen Verfahren nicht. Die Partikel aus hexagonalem Bornitrid und die anorganischen Partikel in der oben beschriebenen Zusammensetzung weisen entsprechend in bevorzugten Ausführungsformen die gleichen Partikelgrößen auf.

Weiterhin ist die erfindungsgemäße Schicht oder Beschichtung im Wesentlichen frei von organischen und silikonbasierten Bestandteilen. Unter "im Wesentlichen frei von" soll dabei verstanden werden, dass der Anteil an organischen und silikonbasierten Bestandteilen unterhalb 0,5 Gew.-% liegt, bevorzugt unterhalb 0,3 Gew.%, insbesondere unterhalb 0,1 Gew.-% (jeweils bezogen auf die Gesamtmasse der Schicht oder Beschichtung, insbesondere nach der Trocknung und der Wärmebehandlung nach einem erfindungsgemäßen Verfahren). Wie oben erwähnt, neigen Beschichtungen mit einem Anteil an organischem Kohlenstoff unter dem Einfluss extremer Hitze und UV-Strahlung zur Schwarzfärbung. Silikone enthalten stets organische Reste. Sie sind daher als Bindemittel für die erfindungsgemäße Schicht oder Beschichtung ebenso ungeeignet wie rein organische Binder, z.B Acrylatbinder.
Bevorzugt ist die nach dem erfindungsgemäßen Verfahren herstellbare Schicht oder Beschichtung frei von Partikeln aus Titandioxid.

Als Füllstoffe kann die Schicht oder Beschichtung beispielsweise Zirkoniumdioxid, Ceroxid, Zinkoxid, Indiumzinnoxid (ITO), Antimonzinnoxid (ATO) oder eine Mischung aus mindestens zwei dieser Verbindungen umfassen. Die Füllstoffe sind bevorzugt als Partikel mit einer mittleren Partikelgröße im Sub-Mikrometer-Bereich (< 1000 nm), besonders bevorzugt zwischen 1 nm und 100 nm, enthalten. Nanoskalige Teilchen lagern sich aufgrund ihrer hohen Oberflächenenergien häufig zusammen und bilden auf diese Weise Agglomerate, die eine größere Teilchengröße vortäuschen als das einzelne Teilchen tatsächlich besitzt. Dementsprechend beziehen sich die Größenangaben bei nanoskaligen Teilchen in der vorliegenden Anmeldung, soweit möglich, auf die mittlere Teilchengröße von isolierten Teilchen, welche in diesem Zusammenhang auch als "Primärpartikel" bezeichnet werden können.

Von den genannten Verbindungen können insbesondere Zinkoxid, ITO und ATO im Übrigen auch zur Einstellung der elektrischen Leitfähigkeit der erfindungsgemäßen Schicht oder Beschichtung eingesetzt werden. Zum gleichen Zweck kann auch Ceroxid dienen.

Alternativ oder zusätzlich kann die erfindungsgemäße Schicht oder Beschichtung, insbesondere zu diesem Zweck, auch Partikel aus mindestens einem Edelmetall, insbesondere aus der Gruppe mit Gold, Platin und Palladium umfassen, die ebenfalls zur Einstellung der Leitfähigkeit dienen können. Diese Partikel können in Anteilen zwischen 0,001 Gew.-% und 5 Gew.-% in der Schicht oder Beschichtung enthalten sein (wiederum bezogen auf die Gesamtmasse der Schicht oder Beschichtung, insbesondere nach der Trocknung und der Wärmebehandlung gemäß einem erfindungsgemäßen Verfahren). Wie die erwähnten Füllstoffe weisen sie bevorzugt nanoskalige Dimensionen der genannten Größenordnung auf.

Bevorzugt setzt sich eine erfindungsgemäße, gebrauchsfertige Schicht oder Beschichtung bei Verwendung eines Wasserglases als Binder anteilig wie folgt zusammen:
- 10 Gew.-% bis 20 Gew.-% des beschriebenen Wasserglasbinders
- 10 Gew.-% bis 15 Gew.-% der Partikel aus hexagonalem Bornitrid,
- 65 Gew.-% bis 75 Gew.-% der beschriebenen anorganischen Partikel Bei Verwendung eines Phosphatglases als Binder ergibt sich bevorzugt folgende Zusammensetzung der gebrauchsfertigen Schicht oder Beschichtung:
   - 20 Gew.-% bis 25 Gew.-% des beschriebenen Phosphatglasbinders
   - 10 Gew.-% bis 15 Gew.-% der Partikel aus hexagonalem Bornitrid,
   - 60 Gew.-% bis 70 Gew.-% der beschriebenen anorganischen Partikel Nicht berücksichtigt dabei sind die oben beschrieben Füllstoffe und/oder Verbindungen zur Verbesserung der Leitfähigkeit sowie eventuelle Lösungs- und/oder Dispergiermittelrückstände.
Als gebrauchsfertig soll hier die erfindungsgemäße Schicht oder Beschichtung nach Abschluss des erfindungsgemäßen Verfahrens bezeichnet werden.
Die Dicke der gebrauchsfertigen, erfindungsgemäßen Schicht oder Beschichtung auf dem Substrat liegt bevorzugt im Bereich zwischen 5 *µ*m und 50 *µ*m, besonders bevorzugt zwischen 20 *µ*m und 30 *µ*m. Eine Dicke dieser Größenordnung gewährleistet selbst unter den oben erwähnten Extrembedingungen eine lange Lebensdauer. Gleichzeitig weist eine Beschichtung mit diesen Dimensionen ein nur sehr geringes Eigengewicht auf. Je dünner die Schicht sein soll, desto feiner gemahlen müssen die verwendeten Partikel aus hexagonalem Bornitrid und die anorganischen Partikel sein.
In besonders bevorzugten Ausführungsformen zeichnet sich eine erfindungsgemäße Schicht oder Beschichtung dadurch aus, dass sie eine Porosität von mindestens 10 %, besonders bevorzugt zwischen 10 % und 40 %, insbesondere zwischen 20 % und 35 %, aufweist. Die Porosität ist dabei definiert als Verhältnis von Hohlraumvolumen zu Gesamtvolumen der Schicht oder Beschichtung, wobei sich die angegebenen Werte auf die gebrauchsfertige Schicht oder Beschichtung auf dem Substrat beziehen. Die Bestimmung dieser Werte erfolgte röntgenanalytisch mittels eines Micro-CT-Scanners. Dabei werden dreidimensionale Darstellungen gebrauchsfertiger Proben der erfindungsgemäßen Schicht erzeugt, aus welchen sich dann das Hohlraumvolumen exakt berechnen lässt. Die Einstellung der Porosität in diesen Bereich ist für Fachmänner für keramische und glaskeramische Beschichtungen problemlos möglich. Die entscheidenden Parameter hierfür sind insbesondere die Auswahl eines geeigneten Binders, die Temperatur bei der Wärmebehandlung sowie Art und Größe sowohl der anorganischen als auch gegebenenfalls der Füllstoffpartikel sowie deren Mengenverhältnis zueinander.

Weiterhin ist es bevorzugt, dass die Schicht oder Beschichtung ein Muster aus Punkten und/oder Linien aufweist, in denen die Substratoberfläche frei liegt oder in bzw. entlang denen die Dicke der Schicht reduziert ist gegenüber der mittleren Schichtdicke. Das Muster setzt sich bevorzugt aus regelmäßig angeordneten Punkten und/oder Linien zusammen. Beispielsweise können diese ein Gitter aus gleichmäßig voneinander beabstandeten, vertikal und horizontal ausgerichteten Linien ausbilden. Auf den Zweck dieser Punkte und/oder Linien sowie auf ihre Herstellung wurde bereits eingegangen.

Ein besonders hervorzuhebendes Merkmal der erfindungsgemäßen Schicht oder Beschichtung ist ihre hohe Temperaturwechselbeständigkeit, insbesondere in einem Bereich zwischen -196 °C und 500 °C. Eine bei 500 °C in einem Ofen gelagerte Probe der Schicht konnte direkt in flüssigen Stickstoff überführt und belassen werden, ohne dass die Schicht Beschädigungen zeigte, auch nicht bei mehrfacher Wiederholung des Vorgangs. Insbesondere mit Schichten, welche die erwähnte bevorzugte Porosität aufwiesen, konnte dieser Test erfolgreich absolviert werden. Das zeigt, dass mit einer erfindungsgemäßen Schicht oder Beschichtung geschützte Substrate auftretende Temperaturgradienten von mehreren 100 K/min unbeschadet überstehen können. Verantwortlich hierfür sind vermutlich die in der Schicht enthaltenen Partikel mit der Schichtgitterstruktur, gegebenenfalls in Kombination mit der beschriebenen Porosität.

Weiter zeichnet sich die erfindungsgemäße Schicht oder Beschichtung durch ihre thermooptischen Eigenschaften aus. Die Schicht oder Beschichtung weist einen sehr geringen Absorptionskoeffizienten *α* in Verbindung mit einem hohen Emissionsvermögen *ε*. Das Emissionsvermögen *ε* ist eine dimensionslose Größe und ein Maß für die Fähigkeit eines Materials, Energie zu absorbieren und diese wieder abzustrahlen. *α* ist ebenfalls dimensionslos und gibt den Anteil der Strahlungsenergie an, den ein Material aus der auftreffenden Strahlung aufnimmt. Das Verhältnis von *α* zu *ε* ist eine wichtige Eigenschaft für Beschichtungen, die im Bereich der Luft- und Raumfahrttechnik eingesetzt werden. Je kleiner dieses Verhältnis ist, desto kühler bleibt das darunterliegende Substrat. Die erfindungsgemäße Schicht oder Beschichtung weist unmittelbar nach der Herstellung vorzugsweise ein Verhältnis *α*/*ε* ≤ 0.35, besonders bevorzugt *α*/*ε* ≤ 0.25, auf. Auch nach mehreren tausend Stunden Exposition eines erfindungsgemäß beschichteten Substrats unter harter UV-Strahlung wurde noch immer ein hervorragendes Verhältnis *α*/*ε* ≤ 0.5 gemessen. Der *α*/*ε* -Wert erfindungsgemäßer Schichten oder Beschichtungen bleibt gegebenenfalls über Jahre nahezu konstant, auch unter hoher Belastung.

Allgemein gilt, dass je rauer die Oberfläche der erfindungsgemäßen Schicht oder Beschichtung ist, desto höher wird der Anteil an diffuser Reflexion. Die Rauheit der Schicht lässt sich gezielt schon während der Auftragung, beispielsweise durch Variation von Sprühdruck, -abstand und Verweilzeit auf dem Substrat, beeinflussen. Daneben kann sie auch durch eine mechanische Nachbearbeitung, wie z.B. Polieren, angepasst werden. Auch die Porosität der erfindungsgemäßen Schicht oder Beschichtung kann einen Einfluss auf die Rauheit ausüben. Folglich ist eine Anpassung der Rauheit auch durch die in Bezug auf die Porosität beschriebenen Parameter möglich.

Eine erfindungsgemäße Schicht oder Beschichtung weist bevorzugt eine mittlere Rauheit Rₐ zwischen 1 *µ*m und 4 *µ*m, insbesondere zwischen 1,5 *µ*m und 2,5 *µ*m sowie eine gemittelte Rautiefe R_{z} zwischen 10 *µ*m und 40 *µ*m, insbesondere zwischen 20 *µ*m und 30 *µ*m, auf. Dabei gibt Rₐ den mittleren Abstand eines Messpunktes auf der Oberfläche zur Mittellinie an. Die Mittellinie schneidet innerhalb der Bezugsstrecke das wirkliche Profil so, dass die Summe der Profilabweichungen (bezogen auf die Mittellinie) minimal wird. R_{z} ist der Mittelwert aus den gemessenen 5 maximalen Profilhöhen, wobei die Profilhöhe der größte senkrechte Abstand der obersten Erhebung von der tiefsten Vertiefung innerhalb der gemessenen Bezugsstrecke ist.

Die erfindungsgemäße Schicht oder Beschichtung zeigt sehr gute Hafteigenschaften, insbesondere auf den erwähnten Oberflächen von Substraten aus Aluminium oder einer hochtemperaturfesten Aluminiumlegierung, Titan oder einer hochtemperaturfesten Titanlegierung oder aus einem faserverstärkten Werkstoff. Bei einem Tape-Test mit einer Abschälstärke (peel strength) von 220 g/cm konnte keine Ablösung der Beschichtung vom Substrat beobachtet werden.

Weiterhin ist auch die hohe Vakuumstabilität hervorzuheben, die eine erfindungsgemäße Schicht oder Beschichtung in der Regel aufweist. In diesem Zusammenhang ist hervorzuhaben, dass die erfindungsgemäße Schicht oder Beschichtung in der Regel bei reduziertem Druck bzw. im Vakuum nicht ausgast.

Auch die im oben beschriebenen Verfahren verwendete Beschichtungszusammensetzung ist Gegenstand der vorliegenden Erfindung. Sie umfasst Partikel mit der Schichtgitterstruktur, anorganische Partikel, einen anorganischen Binder sowie üblicherweise auch ein Lösungs- und/oder Dispergiermittel. Alle Komponenten sowie die Zusammensetzung selbst wurden oben bereits beschrieben, auf die entsprechenden Ausführungen wird hiermit Bezug genommen.

Auch die beschriebenen Füllstoffe und Edelmetallpartikel können in der Zusammensetzung enthalten sein.

Die vorliegende Erfindung umfasst weiterhin jedes Substrat bzw. jeden Gegenstand, insbesondere im Bereich der Luft- und Raumfahrttechnik, der mit einer erfindungsgemäßen Schicht versehen, insbesondere beschichtet, ist. Dabei ist es unerheblich, ob der Gegenstand nur teilweise oder vollständig mit der erfindungsgemäßen Schicht beschichtet ist.

Weitere Merkmale der Erfindung ergeben sich aus der nachfolgenden Beschreibung einer bevorzugten Ausführungsform in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebene besondere Ausführungsform dient lediglich der Erläuterung und zum besseren Verständnis der Erfindung und ist in keiner Weise einschränkend zu verstehen.

### Beispiel

### (1) Herstellung einer zur Herstellung einer erfindungsgemäßen Schicht oder Beschichtung geeigneten Zusammensetzung

Ca. 50 Gewichtsteile einer wässrigen Suspension eines Weißpigments (50 Gew.-% Al₂O₃ in Wasser, Partikelgröße 1,5 - 2,0 *µ*m) werden zusammen mit ca. 20 Gewichtsteilen demineralisiertem Wasser vorgelegt und bei Raumtemperatur (RT) für 5 min gerührt. Danach erfolgt bei RT die Zugabe von ca. 20 Gewichtsteilen eines Kaliumwasserglases (Modul 2,5; 28 %-ige wässrige Lösung). Nach 10 min Rühren bei RT erfolgt die Zugabe von Partikeln aus hexagonalem Bornitrid (Partikelgröße nach Herstellerangabe: 0,1 - 5,0 *µ*m). Es wird so lange gerührt, bis eine homogene Mischung entsteht. Die Mischung wird dann gemahlen, bis ein D₉₀-Wert zwischen 2,0 und 2,9 *µ*m erreicht wird.

### (2) Applikation einer zur Herstellung einer erfindungsgemäßen Schicht oder Beschichtung geeigneten Zusammensetzung auf ein zu schützendes Substrat

Die zu schützenden metallischen Substrate werden vor der Applikation mittels Sandstrahlen aufgeraut. Als Strahlgut eignet sich beispielsweise Glasgranulat, um die gewünschte Rauheit im Bereich von Rₐ > 0,8 zu erzielen.

Zur Entfernung von Schmutz- und Fettresten werden die Substrate in einer tensidischen Lösung bei RT oder 40 °C (eventuell unter Zusatz von Ultraschall) für einige Minuten belassen und nach dem Abspülen der Lösung mehrere Male in Bädern mit demineralisiertem Wasser bei RT oder 40 °C für einige Minuten (eventuell unter Zusatz von Ultraschall) eingelagert. Nach dem Trocknen werden die Substrate mit einem Haftvermittler, bestehend aus einer 14 %-igen Kaliumwasserglaslösung (Modul 2,5), beschichtet.

Die gemäß (1) hergestellte Zusammensetzung wird vor der Auftragung nochmals aufgerührt, gesiebt und in mehreren Beschichtungszyklen mittels einer HVLP-Spritzpistole aufgesprüht (direkter Nassauftrag). Nach jedem Zyklus folgt ein Trocknungsschritt bei 50 °C mit anschließender Schichtdickebestimmung. Ist die gewünschte Schichtdicke erreicht, wird das Bauteil zur Verfestigung der Beschichtung in einem Ofen unter Luftatmosphäre bei 500 °C für 1 h wärmebehandelt.

## Patentansprüche

1. Verfahren zum Schützen eines bevorzugt metallischen Substrats, bei dem es sich um ein Bauteil aus der Luft- und Raumfahrttechnik handelt, vor Beschädigung durch elektromagnetische Strahlung und/oder Partikelbeschuss, bei dem eine Zusammensetzung, umfassend Partikel mit Schichtgitterstruktur, nämlich hexagonales Bornitrid in Partikelform, anorganische Partikel, die transparent oder weiß sind, sowie einen anorganischen Binder, als Schicht auf das Substrat aufgebracht und getrocknet wird, wobei die Schicht im Wesentlichen frei von organischen und von silikonbasierten Bestandteilen ist.

2. Verfahren nach Anspruch 1, **dadurch gekennzeichnet, dass** sich an die Trocknung eine Wärmebehandlung bei einer Temperatur zwischen 50°C und 600°C anschließt oder die Trocknung im Rahmen einer solchen Wärmebehandlung erfolgt.

3. Verfahren nach einem der Ansprüche 1 oder 2, **dadurch gekennzeichnet, dass** als anorganische Partikel mindestens eine Komponente aus der Gruppe mit Aluminiumoxid, insbesondere Korund, Aluminiumtitanat und Zirkoniumdioxid enthalten ist.

4. Verfahren nach einem der Ansprüche 1 bis 3, **dadurch gekennzeichnet, dass** die Zusammensetzung als anorganischen Binder ein Wasserglas oder ein Phospatglas umfasst.

5. Verfahren nach einem der vorangegangenen Ansprüche, **dadurch gekennzeichnet, dass** die Zusammensetzung die folgenden Bestandteile in den folgenden Anteilen enthält:
- den anorganischen Binder in einem Anteil zwischen 10 und 30 Gew.-%, bevorzugt zwischen 15 und 25 Gew.-%,
- die anorganischen Partikel in einem Anteil zwischen 40 und 70 Gew.-%, bevorzugt zwischen 50 und 60 Gew.-%,
- die Partikel aus hexagonalem Bornitrid, in einem Anteil zwischen 2 und 10 Gew.-%, bevorzugt zwischen 4 und 7 Gew.-% und
- das Lösungs- bzw. Dispergiermittel in einem Anteil zwischen 10 Gew.-% und 40 Gew.-%, bevorzugt zwischen 15 Gew.-% und 25 Gew.-%,
wobei sich die Anteile zu 100 Gew.-% ergänzen.

6. Verfahren nach einem der vorangegangenen Ansprüche, **dadurch gekennzeichnet, dass** die Schicht auf dem Substrat einem Strukturierungsprozess unterzogen wird, bei dem die auf das Substrat aufgebrachte Schicht punktuell oder entlang von einer oder mehreren durchgängigen Linien abgetragen wird.

7. Schicht oder Beschichtung auf einem Teil eines Raumflugkörpers, **dadurch gekennzeichnet, dass** sie eine glasartige Matrix aufweist, in welche anorganische Partikel, die transparent oder weiß sind, sowie Partikel mit Schichtgitterstruktur, nämlich hexagonales Bornitrid in Partikelform, eingelagert sind, wobei die Schicht im Wesentlichen frei von organischen und von silikonbasierten Bestandteilen ist.

8. Schicht oder Beschichtung nach Anspruch 7, **dadurch gekennzeichnet, dass** sie Partikel aus zumindest einem Edelmetall aus der Gruppe mit Gold, Platin und Palladium umfasst.

9. Schicht oder Beschichtung nach einem der Ansprüche 7 bis 8, **dadurch gekennzeichnet, dass** sie eine Porosität von mindestens 10 % aufweist, bevorzugt zwischen 10 % und 70 %, insbesondere zwischen 30 % und 45 %.

10. Schicht oder Beschichtung nach einem der Ansprüche 7 bis 9, **dadurch gekennzeichnet, dass** sie ein Muster aus Punkten und/oder Linien aufweist, in denen die Substratoberfläche frei liegt oder in bzw. entlang denen die Dicke der Schicht reduziert ist gegenüber der mittleren Schichtdicke.

11. Teil eines Raumflugkörpers wie Sonden- und Satellitenteil, mindestens teilweise beschichtet mit einer Schicht oder Beschichtung gemäß den Ansprüchen 7 bis 10, hergestellt gemäß einem Verfahren nach einem der Ansprüche 1 bis 6.

## Claims

1. Method of protecting a preferably metallic substrate, which is a component from aerospace technology, from damage by electromagnetic radiation and/or particle bombardment, wherein a composition comprising particles having a layer lattice structure, namely hexagonal boron nitride in particle form, inorganic particles which are transparent or white, and an inorganic binder is applied onto the substrate in the form of a layer and dried, the layer being substantially free from organic and from silicone-based constituents.

2. Method according to Claim 1, **characterized in that** the drying is followed by a heat treatment at a temperature between 50°C and 600°C or the drying is effected in the course of such a heat treatment.

3. Method according to either of Claims 1 and 2, **characterized in that** inorganic particles present include at least one component from the group of aluminium oxide, especially corundum, aluminium titanate and zirconium dioxide.

4. Method according to any of Claims 1 to 3, **characterized in that** the composition comprises as inorganic binder a waterglass or a phosphate glass.

5. Method according to any of the preceding claims, **characterized in that** the composition comprises the following constituents in the following proportions:
- the inorganic binder in a proportion between 10% and 30% by weight, preferably between 15% and 25% by weight,
- the inorganic particles in a proportion between 40% and 70% by weight, preferably between 50% and 60% by weight,
- the particles of hexagonal boron nitride in a proportion between 2% and 10% by weight, preferably between 4% and 7% by weight, and
- the solvent/dispersant in a proportion between 10% and 40% by weight, preferably between 15% and 25% by weight,
where the proportions add to up to 100% by weight.

6. Method according to any of the preceding claims, **characterized in that** the layer on the substrate is subjected to a structuring process, wherein the layer applied to the substrate is removed pointwise or along one or more continuous lines.

7. Layer or coating on a part of a spacecraft, **characterized in that** it has a vitreous matrix in which inorganic particles which are transparent or white and also particles having a layer lattice structure, namely hexagonal boron nitride in particle form, are embedded, where the layer is substantially free from organic and from silicone-based constituents.

8. Layer or coating according to Claim 7, **characterized in that** it comprises particles of at least one precious metal from the group of gold, platinum and palladium.

9. Layer or coating according to either of Claims 7 and 8, **characterized in that** it has a porosity of at least 10%, preferably between 10% and 70%, especially between 30% and 45%.

10. Layer or coating according to any of Claims 7 to 9, **characterized in that** it has a pattern of dots and/or lines in which the substrate surface is exposed, or in or along which the thickness of the layer is reduced compared to the mean layer thickness.

11. Part of a spacecraft such as probe part and satellite part, at least partly coated with a layer or coating according to Claims 7 to 10, produced by a method according to any of Claims 1 to 6.

## Revendications

1. Procédé de protection d'un substrat de préférence métallique, qui consiste en un composant issu de la technologie aérospatiale et astronautique, d'un endommagement par un rayonnement électromagnétique et/ou un bombardement de particules, selon lequel une composition comprenant des particules à structure réticulaire en couche, à savoir du nitrure de bore hexagonal sous forme particulaire, des particules inorganiques, qui sont transparentes ou blanches, ainsi qu'un liant inorganique, est appliquée sous la forme d'une couche sur le substrat et séchée, la couche étant essentiellement exempte de constituants organiques et à base de silicone.

2. Procédé selon la revendication 1, **caractérisé en ce que** le séchage est suivi par un traitement thermique à une température comprise entre 50 °C et 600 °C ou le séchage a lieu dans le cadre d'un tel traitement thermique.

3. Procédé selon l'une quelconque des revendications 1 ou 2, **caractérisé en ce qu'**au moins un composant du groupe constitué par l'oxyde d'aluminium, notamment le corindon, le titanate d'aluminium et le dioxyde de zirconium, est contenu en tant que particules inorganiques.

4. Procédé selon l'une quelconque des revendications 1 à 3, **caractérisé en ce que** la composition comprend en tant que liant inorganique un verre soluble ou un verre de phosphate.

5. Procédé selon l'une quelconque des revendications précédentes, **caractérisé en ce que** la composition contient les constituants suivants en les proportions suivantes :
- le liant inorganique en une proportion comprise entre 10 et 30 % en poids, de préférence entre 15 et 25 % en poids,
- les particules inorganiques en une proportion comprise entre 40 et 70 % en poids, de préférence entre 50 et 60 % en poids,
- les particules de nitrure de bore hexagonal en une proportion comprise entre 2 et 10 % en poids, de préférence entre 4 et 7 % en poids, et
- le solvant ou dispersant en une proportion comprise entre 10 % en poids et 40 % en poids, de préférence entre 15 % en poids et 25 % en poids,
la somme des proportions étant de 100 % en poids.

6. Procédé selon l'une quelconque des revendications précédentes, **caractérisé en ce que** la couche sur le substrat est soumise à un procédé de structuration, selon lequel la couche appliquée sur le substrat est éliminée ponctuellement ou le long d'une ou de plusieurs lignes continues.

7. Couche ou revêtement sur une partie d'un engin spatial, **caractérisé en ce qu'**il ou elle comprend une matrice vitreuse, dans laquelle des particules inorganiques, qui sont transparentes ou blanches, ainsi que des particules à structure réticulaire en couche, à savoir du nitrure de bore hexagonal sous forme particulaire, sont incorporées, la couche étant essentiellement exempte de constituants organiques et à base de silicone.

8. Couche ou revêtement selon la revendication 7, **caractérisé en ce qu'**il ou elle comprend des particules d'au moins un métal noble du groupe constitué par l'or, le platine et le palladium.

9. Couche ou revêtement selon l'une quelconque des revendications 7 à 8, **caractérisé en ce qu'**il ou elle présente une porosité d'au moins 10 %, de préférence comprise entre 10 % et 70 %, notamment entre 30 % et 45 %.

10. Couche ou revêtement selon l'une quelconque des revendications 7 à 9, **caractérisé en ce qu'**il ou elle présente un motif de points et/ou de lignes dans lesquels ou dans lesquelles la surface du substrat est exposée ou dans ou le long desquels ou desquelles l'épaisseur de la couche est réduite par rapport à l'épaisseur de couche moyenne.

11. Partie d'un engin spatial, telle que partie d'une sonde et d'un satellite, au moins partiellement revêtue avec une couche ou un revêtement selon les revendications 7 à 10, fabriqué par un procédé selon l'une quelconque des revendications 1 à 6.
